# DEMANDE DE BREVET EUROPEEN

(11) **EP 3 978 246 A1**
(43) Date de publication de la demande: **06.04.2022**
(21) Numéro de dépôt: 21200326.3
(22) Date de dépôt: 30.09.2021
(51) Int. Cl.: B33Y 10/00, B29C 64/118, B33Y 40/20, B33Y 70/00, B33Y 80/00, C04B 35/111, C04B 35/46, C04B 35/486, C04B 35/565, C04B 35/634, C04B 35/638, B28B 1/00

(54) **UTILISATION D'UNE COMPOSITION COMPRENANT UN TAUX ÉLEVÉ DE MATÉRIAU(X) INORGANIQUE(S) ET UN ÉLASTOMÈRE THERMOPLASTIQUE DANS UN PROCÉDÉ DE FABRICATION ADDITIVE**

(30) Priorité: 02.10.2020 FR 2010098
(71) Demandeur: Universite De Bretagne Sud, 56100 Lorient (FR); Capnovia, 22540 Louargat (FR)
(72) Inventeur: GROHENS, Yves, 56520 GUIDEL (FR); CORRE, Yves-Marie, 56100 LORIENT (FR); PELLETER, Jacques, 29600 MORLAIX (FR)
(74) Mandataire: Opilex

(57) **Abrégé**

Utilisation d'une composition comprenant, par rapport au poids total de la composition, a) de 75 à 90,75% en poids d'au moins un matériau inorganique, et une phase polymère comprenant b) de 9 à 20 % en poids d'au moins un élastomère thermoplastique, c) de 0,25 à 5% en poids d'au moins un polyéthylène à basse densité; d) de 0 à 5% en poids d'au moins un polyéthylène glycol de masse molaire allant de 5000 à 20000 g/mol ,e) de 0 à 3 % en poids de poly(téréphtalate d'éthylène), de préférence glycolé,; dans un procédé de fabrication additive par dépôt de matière fondue. Procédé de préparation d'un article 3D utilisant cette composition, article obtenu comprenant au moins de 99 % poids de matériau(x) inorganique(s) par rapport au poids total de l'article et utilisations de cet article.

## Description

L'invention concerne le domaine de la production d'objets tridimensionnels mettant en œuvre un procédé de fabrication additive par dépôt de matière fondue. Plus particulièrement la présente invention concerne la production d'objets tridimensionnels à partir d'une composition comprenant un taux élevé de matériau(x) inorganique(s).

Durant les deux dernières décennies, la technologie de l'impression 3D, encore appelée fabrication additive, s'est développée rapidement en tant que technologie émergeante pour le prototypage rapide dans des domaines aussi divers que l'aéronautique, le génie biomédical ou encore l'enseignement des sciences notamment des sciences de l'ingénieur.

Cette technologie utilise plusieurs méthodes parmi lesquelles on compte la fusion sélective par laser (SLM), le frittage sélectif par laser (SLS), la fusion par faisceaux d'électrons (EBM), la photopolymérisation (SLA), le dépôt de matière fondue et plus particulièrement le dépôt de fil fondu (FFF).

La présente invention concerne plus particulièrement la technologie de dépôt de matière fondue. Cette méthode consiste à utiliser un matériau thermoplastique, à entraîner ce matériau à travers une extrudeuse dans laquelle il est fondu jusqu'à une tête d'impression permettant de déposer, par couches successives, superposées, ledit matériau thermoplastique fondu. La conception de l'article souhaité est effectuée par dépôt selon une trajectoire en 3 dimensions préalablement définie, et assistée par ordinateur. La solidification couche par couche du matériau déposé est ainsi contrôlée afin d'obtenir l'article 3D. L'article obtenu à l'issue de cette étape est généralement appelé « pièce verte » ou « green body » en langue anglaise. Puis, après une étape de déliantage ainsi que d'éventuelles étapes intermédiaires définies en fonction des matériaux choisis, un article appelé « pièce brune » ou « brown body » en langue anglaise est obtenu. Enfin, la pièce brune est soumise à une étape de frittage conduisant à l'article final.

La présente invention concerne plus particulièrement la préparation d'un article tridimensionnel en matériau inorganique de type métal, alliage de métaux ou céramique.

Des procédés de préparation d'articles comprenant un matériau inorganique par fabrication additive sont déjà connus. Ces procédés mettent en œuvre une étape de fabrication d'une pièce verte obtenue à partir d'un matériau inorganique et d'une composition de liants, une étape de déliantage permettant l'obtention de la pièce brune correspondante et une étape de frittage. Ainsi la demande de brevet US 5738817A décrit la fabrication d'articles comprenant un matériau inorganique de type métal ou céramique utilisant un liant choisi parmi les liants thermoplastiques, les liants thermodurcissables, les liants solubles dans l'eau ou dans les solvants organiques. La demande de brevet WO2016/012486 met en œuvre, à titre de liant majoritaire, un polyoxyméthylène qui est un polymère présentant un haut degré de cristallinité, en mélange avec une polyoléfine et au moins un autre polymère. Ces procédés ne conduisent pas toujours à des articles satisfaisants : les articles peuvent être déformés et présenter des boursouflures en surface ainsi que des fissurations, des délaminations, ou encore conduire à des pièces vertes trop cassantes pour pouvoir être manipulées, transportées facilement.

Il demeure toujours un besoin de compositions et de procédés pour impression 3D qui ne présentent pas les inconvénients des technologies de l'art antérieur.

De manière surprenante et avantageuse, les inventeurs de la présente invention ont montré que l'utilisation d'un liant comprenant au moins un polymère élastomère thermoplastique (TPE) et au moins un polyéthylène à basse densité permet l'obtention d'articles qui ne présentent pas les inconvénients de l'art antérieur. Avantageusement les articles obtenus par le procédé de fabrication additive selon la présente invention comprennent de 99 à 100 poids de matériau(x) inorganiques, le complément à 100% étant constitué de traces de liants résiduels.

L'invention porte ainsi sur l'utilisation d'une composition comprenant :
a) de 75 à 90,75% en poids d'au moins un matériau inorganique par rapport au poids total de la composition, et une phase polymère comprenant :
b) de 9 à 20 % en poids d'au moins un élastomère thermoplastique par rapport au poids total de la composition,
c) de 0,25 à 5% en poids d'au moins un polyéthylène à basse densité par rapport au poids total de la composition ;
d) de 0 à 5% en poids d'au moins un polyéthylène glycol de masse molaire allant de 5000 à 20000 g/mol, par rapport au poids total de la composition,
e) de 0 à 3 % en poids de poly(téréphtalate d'éthylène), de préférence glycolé, par rapport au poids total de la composition,
dans un procédé de fabrication additive par dépôt de matière fondue.

Elle vise également un procédé de fabrication d'un article par impression 3D, comprenant les étapes suivantes dans cet ordre :
i) placer une composition utilisée selon l'invention dans la zone d'alimentation d'une imprimante pour fabrication additive par dépôt de matière fondue,
ii) entraîner ladite composition vers la tête d'impression de l'imprimante composée d'un corps de chauffe et d'une buse d'impression où ladite composition est portée à une température Tc comprise entre la température de fusion de la composition et ladite température de fusion de la composition +20°C ;
iii) extruder la composition fondue au travers de la buse de la tête d'impression pour former une pièce verte tridimensionnelle par dépôt de couches successives,
iv) éliminer au moins une partie de la partie polymère de la pièce verte par chauffage pour former une pièce brune tridimensionnelle,
v) fritter la pièce brune pour former un article comprenant au moins de 99 % poids de matériau(x) inorganique(s) par rapport au poids total de l'article.

L' invention concerne encore un article obtenu à partir de la composition utilisée selon l'invention ou obtenu selon le procédé suivant l'invention comprenant au moins de 99 % poids de matériau(x) inorganique(s) par rapport au poids total de l'article, ainsi que l'utilisation de l'article selon l'invention en aéronautique en particulier dans la partie interne des moteurs et dans la partie échappement des moteurs ; en bijouterie ; dans des dispositifs tels que les dispositifs de filtration, les réacteurs, les microréacteurs, les catalyseurs et pour le rechargement local des pièces d'usure.

D'autres caractéristiques, propriétés et avantages de l'invention ressortiront clairement de la description qui en est faite ci-après, à titre indicatif et nullement limitatif.

L'invention porte également sur les variantes décrites ci-dessous. L'homme du métier comprendra que chacune des caractéristiques des variantes suivantes peut être combinée indépendamment aux caractéristiques ci-dessus, sans pour autant constituer une généralisation intermédiaire.

La composition utilisée dans le procédé de fabrication additive selon la présente invention peut se présenter sous la forme de granulés ou d'un filament. Lorsque le procédé de fabrication additive est mis en œuvre au moyen d'une composition sous la forme d'un filament, on parle alors de dépôt de fil fondu.

La composition utilisée selon la présente invention permet avantageusement l'obtention d'un filament non cassant, et présentant des propriétés très satisfaisantes en matière de flexibilité. En particulier, ladite composition présente des modules d'élasticité en flexion (Ef) compris entre 250 et 450 MPa et/ou une contrainte maximale en flexion (σ_{fM}) comprise entre 3 et 5 MPa pour une déformation en flexion (ε_{fM}) comprise entre 2 et 5 %, les modules d'élasticité en flexion et contrainte maximale en flexion étant définis selon la norme d'essai ISO 178:2019.

Le filament peut ainsi être avantageusement mis en bobine, qui est la forme la plus classique pour sa commercialisation, on dit alors qu'il est facilement bobinable. Le conditionnement en bobine peut ainsi être réalisé sans rupture du filament pour des rayons de courbure R supérieurs à 100 mm.

Un autre avantage est que la composition utilisée selon la présente invention présente une bonne homogénéité ainsi qu'une rhéologie permettant un écoulement régulier lors de la mise en œuvre du procédé de fabrication additive.

En particulier, ladite composition présente des propriétés rhéofluidifiantes sous cisaillement avec des viscosités (η) comprises entre 3000 et 4500 Pa.s pour un cisaillement de 20 s⁻¹ se réduisant à des valeurs comprises entre 1000 et 1500 Pa.s, pour un cisaillement de 100 s⁻¹, les viscosités étant mesurées selon la norme d'essai ISO 11443:2014.

La viscosité de cette composition présente de plus une bonne stabilité d'écoulement avec des variations de viscosités mesurées au cours du temps de l'ordre de 2 à 4% pour un cisaillement donné. Cet avantage permet une impression de la pièce verte selon un débit régulier, menant à l'obtention d'articles présentant très peu de défauts d'aspect.

Ladite composition permet également l'obtention d'une bonne cohésion entre les couches obtenues par les dépôts successifs de composition, cette bonne tenue inter-couche permet le stockage et le transport de la pièce verte sans en altérer la structure. La pièce verte peut donc être conservée quelques semaines avant d'être transformée en pièce brune, sans incidences sur l'article final.

Les pièces vertes obtenues, après impression, à partir de la composition selon l'invention présentent les propriétés mécaniques décrites ci-après pour une sollicitation perpendiculaire aux stratifications d'impression : un module d'élasticité en traction (E) compris entre 300 et 500 MPa et/ou une contrainte maximale en traction (σ_{tM}) comprise entre 1.5 et 3 MPa pour une déformation (ε_{tM}) comprise entre 0.75 et 2 %, ces propriétés mécaniques sont mesurées suivant la norme d'essai ISO 527-1:2019.

Le module d'élasticité en traction (E) est calculé à partir d'un essai de traction d'une éprouvette entre deux mors et un déplacement à une vitesse contrôlée sur une machine d'essai mécanique. Il est déterminé à partir de la courbe linéaire de déformation élastique suivant la norme d'essai ISO 527-1:2019 tel que :

Module de rigidité (MPa)=(σf2-σf1)/(εf2-εf1) où σf1 est la contrainte, exprimée en MPa, mesurée à la valeur de déformation de εf1=0,0005 et of2 est la contrainte, exprimée en MPa, mesurée à la valeur de déformation de εf2=0,0025.

L'ensemble des propriétés rhéologiques et mécaniques de la composition utilisée selon l'invention permettent de garantir une mise en œuvre optimale des filaments sur la ligne d'extrusion filage. La tenue mécanique de la composition en voie fondue puis en phase de solidification permet un filage stable au travers d'une filière d'extrusion puis un tirage et un enroulement sous une contrainte de traction comprise entre 0,5 et 3 kg qui est la gamme de valeurs de contrainte usuelle, en fonction du diamètre de filament et de la vitesse linéaire d'enroulement visée.

Ladite composition permet en outre d'obtenir au moyen d'une ligne d'extrusion filage mono-vis des filaments présentant une stabilité dimensionnelle importante caractérisée par une variabilité de diamètre maximale de plus (+) ou moins (-) 3%.

Ladite composition permet l'obtention de pièces vertes imprimées ayant une tenue dimensionnelle optimale, cette tenue permettant, lors de la phase de déliantage, un respect des géométries finales visées pour la pièce brune.

Par ailleurs, la composition utilisée permet l'obtention d'une pièce brune qui présente un retrait faible et isotrope lors de l'étape de frittage. La valeur de retrait volumique est compris entre 35 et 55 % volumique mesuré selon la norme d'essai ISO 21821:2019. De plus, il n'est pas observé de différences significatives entre le retrait dans le plan et le retrait selon l'axe de dépose.

Les articles obtenus par le procédé selon l'invention présentent une densité élevée, proche de la densité du matériau inorganique utilisé. La porosité résiduelle est comprise entre 1,5 et 4% volumique mesurée selon la norme d'essai ISO 21821:2019.

Le procédé selon l'invention est avantageusement mis en œuvre pour fabriquer des articles nécessitant une stabilité dimensionnelle sur une large gamme de températures, une bonne inertie chimique et une résistance accrue à l'abrasion. En particulier, ces articles sont utilisables dans des domaines tels que l'aéronautique, en particulier dans la partie interne des moteurs et dans la partie échappement des moteurs ; la bijouterie ; dans des dispositifs tels que les dispositifs de filtration, les réacteurs, les microréacteurs, les catalyseurs et également pour le rechargement local des pièces d'usure. Par « rechargement local des pièces d'usure » on entend l'ajout local de matériau inorganique sur les pièces usées.

### Compositions

La composition utilisée dans le procédé selon l'invention comprend au moins un matériau inorganique en une quantité allant de 75 à 90,75% en poids par rapport au poids total de la composition et de 9,25 à 25 en poids d'un mélange polymérique par rapport au poids total de la composition, le mélange polymérique comprenant au moins un élastomère thermoplastique et au moins un polyéthylène à basse densité, le mélange polymérique comprenant également les autres composants, différents des élastomères thermoplastiques et polyéthylènes à basse densité, tels que par exemple des liants, dispersants, colorants, pigments, anti-oxydants.

La composition utilisée dans le procédé selon l'invention est par conséquent constituée d'une partie inorganique et d'une partie polymérique, la partie inorganique étant constituée d'un ou plusieurs matériaux inorganiques et la partie polymérique étant constituée du ou des élastomère(s) thermoplastique(s), du ou des polyéthylène(s) à basse densité ainsi que, le cas échéant, le ou les polyéthylène-glycols de masse molaire allant de 5000 à 20000g/mol, le poly(téréphtalate d'éthylène) et les éventuels autres constituants de la composition tels que par exemple les dispersants, colorants, pigments, anti-oxydants.

### Matériaux inorganiques

La composition utilisée dans la présente invention comprend au moins un matériau inorganique en une quantité allant de 75 à 90,75%, de préférence de 82 à 90%, et de manière encore préférée de 83 à 86 % en poids par rapport au poids total de la composition. Généralement, ladite composition comprend au moins un matériau inorganique en une quantité allant de 50 à 60% en volume par rapport au volume total de la composition.

Tous les matériaux inorganiques peuvent être utilisés seuls ou en mélanges.

Généralement les matériaux inorganiques sont sous forme de particules de taille allant de 0,50 à 500 µm.

Par « particules de taille allant de 0,50 à 500 µm » au sens du présent texte, on entend des particules dont la taille de la dimension la plus grande va de 0,50 à 500 µm. Généralement ledit matériau inorganique est sous forme de poudre. Une poudre correspond à un facteur de forme égal à 1, la dimension la plus grande correspond alors au diamètre desdites particules formant la poudre. De préférence, le diamètre des poudres va de 0,05 à 100 µm.

En particulier, ledit matériau inorganique est choisi parmi les céramiques, les métaux, les alliages de métaux.

Par « céramique », on entend un article ayant un corps vitrifié ou non, de structure cristalline ou partiellement cristalline, ou de verre, dont le corps est formé de substances essentiellement inorganiques et non métalliques, et qui est formé par une masse en fusion qui se solidifie en se refroidissant, ou qui est formé et porté à maturité, en même temps ou ultérieurement, par l'action de la chaleur.

Parmi les céramiques utilisables dans la présente invention, on compte -les oxydes de métaux, en particulier les oxydes choisis parmi TiO₂, MgO, CaO, SiO₂, Na₂O, Al₂O₃, ZrO₂, Y₂O₃ et préférence TiO₂, ZrO₂, -les non-oxydes en particulier les carbures, borures, nitrures, en particulier choisis parmi SiC, Si₃N₄, TiB et AIN.

Les métaux utilisables dans la présente invention sont de préférence choisis parmi le fer, le cuivre, le tungstène, le titane, le chrome, l'étain, le cobalt, l'aluminium, le molybdène, le tantale, le zirconium, l'argent, le zinc, le nickel, les poudres de fer carbonyle et de manière préférée l'aluminium, le titane, et le cuivre.

En outre les métaux peuvent être prétraités notamment par un traitement de surface par voie chimique ou électrolytique, ou préenrobés par des polymères, oligomères ou monomères aptes à améliorer l'adhésion et l'interface matrice / métal de type covalente ou non. Le traitement du métal pourra aussi inclure des complexations par molécules organiques provoquant des chélations afin d'optimiser les interfaces matrice / métal.

Les alliages de métaux utilisables dans la présente invention comprennent les alliages de plusieurs métaux, généralement deux ou trois choisis parmi ceux mentionnés ci-dessus et les alliages d'un métal et d'un élément choisi parmi le bore, le carbone, le silicium, le phosphore, le soufre et le sélénium. De manière particulière, les alliages sont choisis parmi les alliages de fer tels que fontes blanches, fontes grises, aciers, les alliages de tungstène, les alliages de titane, les alliages de cuivre, les alliages d'aluminium. De préférence les alliages sont choisis parmi les aciers inoxydables, les alliages de nickel, de chrome et de fer en particulier vendus sous la marque Iconel^{®}.

Selon une variante préférée le matériau inorganique est sous forme d'une poudre de distribution mono ou multi modale. La distribution de taille de particules peut inclure conjointement des populations sub-microniques et microniques

De préférence, le matériau inorganique est choisi dans le groupe formé par le dioxyde de titane (TiO₂), le dioxyde de zirconium (ZrO₂), l'oxyde d'aluminium III (Al₂O₃), le carbure de silicium (SiC), de préférence le dioxyde de titane. De manière particulière le matériau inorganique est le TiO₂ multimodal commercialisé sous la dénomination TiO2 Kronos^{®} 1000 par la société Kronos Worldwide, Inc..

### Polymères élastomères thermoplastiques

La composition utilisée selon la présente invention comprend de 9 à 20 %, de préférence de 9 à 17 % et de manière préférée de 9 à 14 % en poids d'au moins un élastomère thermoplastique par rapport au poids total de la composition.

Les polymères élastomères thermoplastiques, encore appelés TPE pour « Thermoplastic Elastomer », sont des copolymères ou des mélanges de polymères qui combinent les propriétés élastiques des élastomères avec des propriétés thermoplastiques : ils fondent et durcissent, de manière réversible, sous l'action de la chaleur. Le caractère thermoplastique permet de les utiliser dans un procédé d'extrusion.

Généralement, les TPE utilisables dans la présente invention présentent une température de fusion allant de 100°C à 300°C, de préférence de 150°C à 250°C et de manière préférée de 170°C à 220°C. Les méthodes de détermination du point de fusion des polymères et en particulier des TPE sont bien connues de l'homme du métier, en particulier les points de fusion des TPE peuvent être mesurés par calorimétrie différentielle à balayage ou DSC pour « Differential Scanning Calorimetry» en langue anglaise selon la norme ISO 11357-1:2016. En effet ces TPE doivent pouvoir être fondus et mélangés avec les autres composants pour conduire à des compositions homogènes et présentant les propriétés d'écoulement requises pour la mise en œuvre d'un procédé de fabrication additive par dépôt de matière fondue.

Les TPE utilisables présentent une dureté allant de 20 à 97 Shore A, de préférence de 50 à 92 Shore A et de manière préférée de 60 à 90 Shore A selon la norme ISO 48-4:2018.

Les TPE utilisables présentent des élongations à rupture en traction allant de 100 % à 900% de préférence de 250% à 800% et de manière préférée de 300% à 650% selon la norme ISO 37:2017.

Les TPE utilisables présentent des résistances à la traction allant de 2 MPa à 12 MPa, de préférence de 4 MPa à 9 MPa et de manière préférée de 5 MPa à 8MPa selon la norme ISO 37:2017.

Les TPE utilisables selon la présente invention sont de préférence choisis dans le groupe constitué par les TPE de polyuréthanes (TPU), les TPE styréniques, les TPE copolyesters, les TPE copolyamides (TPA), les TPE oléfiniques suivant la classification issue de la norme ISO 18064:2014. De préférence ils sont choisis dans le groupe constitué par les TPE styréniques , les TPE copolyesters et les TPE oléfiniques.

Les TPE styréniques, encore appelés TPE-S ou TPS, sont des copolymères à blocs comprenant un segment rigide de type styrène et un segment souple choisi dans le groupe constitué par les polybutadiènes, le polyisoprène, les polyéthylène-butène, les polyéthylène-propylène, les polyéthylène-éthylène/propylène. De préférence les TPE styréniques sont choisis parmi le polystyrène-b-polybutadiène-b- polystyrène appelé SBS et le polystyrène-b-poly(éthylène-butène) -b- polystyrène appelé SEBS.

Les TPE copolyesters, encore appelés TPE-E ou TPC, sont des copolymères à blocs comprenant un segment rigide de type polyester et un segment souple de type polyéther, ils sont parfois nommé polymères COPE (copolymères bloc éther-ester).

Les TPE oléfiniques sont des mélanges de polymères thermoplastiques et d'élastomères, ils regroupent les TPE oléfiniques non vulcanisés encore appelés TPE-O ou TPO et les TPE oléfiniques vulcanisés encore appelés TPE-V ou TPV. A titre de TPO, on peut citer le mélange PP/EDPM (éthylène-propylène-diène monomère) non vulcanisé, à titre de TPV, on peut citer le mélange PP/EDPM vulcanisé.

De préférence, les TPE utilisables dans les compositions mise en œuvre selon la présente invention sont des TPS constitués de copolymères de type SBS-SEBS, et plus particulièrement issus de la gamme Thermolast ^{®} K commercialisée par la société Kraiburg TPE sous références TF4-CGT, TF5-CGT, TF6-CGT, TF7CGT, TF8-CGT ou TF9-CGT ou de la gamme Dynaflex ^{®} commercialisée par la société Polyone sous référence G7640-1, G2701-1000-01, G3204-1000-03 ou G7690-1.

### Polyéthylènes à basse densité

La composition utilisée selon la présente invention comprend de 0,25 à 5 %, de préférence de 1 à 4,7 % et de manière préférée de 2 à 4,5 % en poids d'au moins un polyéthylène à basse densité par rapport au poids total de la composition.

Les polyéthylènes utilisables sont les polyéthylènes à basse densité généralement nommés PEBD ou encore LDPE pour « low density polyethylene » et les polyéthylènes linéaires basse densité LLDPE. Leur densité va généralement de 0,91 à 0,94 g/cm³ selon la norme d'essai ISO 1183-2:2019.

### Polyéthylène glycol

Avantageusement, la composition utilisée selon la présente invention comprend du polyéthylène glycol (PEG) de masse molaire allant de 5000 à 20000 g/mol.

Plus particulièrement, la composition utilisée selon la présente invention comprend de 0 à 5 %, de préférence de 0,5 à 4 % et de manière préférée de 1 à 3 % en poids de polyéthylène glycol de masse molaire allant de 5000 à 20000 g/mol, de préférence 6000 à 20000 g/mol par rapport au poids total de la composition. De manière préférée, le polyéthylène glycol est choisi parmi le polyéthylène glycol de masse molaire égale à 8000 g/mol (PEG 8000) et le polyéthylène glycol de masse molaire égale à 20000 g/mol (PEG 20000).

### Poly(téréphtalate d'éthylène) ou PET

La composition utilisée selon la présente invention comprend de 0 à 3 %, de préférence de 0,5 à 2,5 % et de manière préférée de 1 à 2,2 % en poids de poly(téréphtalate d'éthylène), de préférence glycolé, par rapport au poids total de la composition.

### Additifs

A titre d'additifs utilisables dans les compositions utilisées selon l'invention, on peut citer les dispersants, colorants, pigments, anti-oxydants.

### Procédé de préparation de la composition

La composition utilisée selon la présente invention est préparée en mélangeant les composants de la composition à savoir le ou les matériau(x) inorganique(s), le ou les élastomère(s) thermoplastique(s), le ou les polyéthylène(s) à basse densité, de préférence au moyen d'une extrudeuse bivis co-rotative.

Généralement, les composants sont dosés séparément à l'aide de doseurs gravimétriques puis introduits par une trémie située à l'entrée de l'extrudeuse bivis au niveau de la culasse d'alimentation matière. L'ensemble vis/fourreau composant l'extrudeuse bivis co-rotative est avantageusement chauffée à une température dite « température de procédé » Tp supérieure à la température de fusion du polymère de la composition ayant le point de fusion Tmax le plus haut. Ladite température Tp du procédé est préférentiellement choisie entre Tmax et Tmax + 20°C. Généralement Tp va de 170 à 240 °C.

De manière préférée, la composition utilisée selon la présente invention est préparée selon un procédé comprenant les étapes suivantes, dans cet ordre :
i) dosage séparé des composants au moyen de doseurs gravimétriques et introduction, dans la trémie d'une extrudeuse bivis co-rotative, de la partie inorganique et la partie polymérique comprenant le ou les élastomère(s) thermoplastique(s), le ou les polyéthylène(s) à basse densité, le cas échéant le ou les polyéthylène-glycol(s) de masse molaire allant de 5000 à 20000g/mol et le cas échéant le poly(éthylène téréphtalate), puis chauffage à une température Tp comprise entre la température de fusion du polymère de point de fusion Tmax le plus élevé de la composition et ladite température Tmax + 20°C, la vitesse de rotation des vis de l'extrudeuse bi-vis co-rotative est établie entre 100 et 800 RPM, c'est-à-dire tours par minute, de préférence entre 200 et 600 RPM et de manière préférée entre 250 et 450 RPM ;
ii) mélange par passage dans l'extrudeuse bivis co-rotative et récupération du mélange obtenu sous forme de joncs de diamètre compris entre 2 et 4mm, refroidis sous air, et transformés en granulés cylindriques de diamètre compris entre 2 et 4 mm et de longueur comprise entre 1,5 et 5 mm à l'aide d'un granulateur à couteaux rotatifs, ou découpe sous eau en tête de filière pour obtention de granules sphériques de diamètre compris entre 0,5 et 3 mm.

Selon une première variante, les granulés obtenus sont transformés en filaments calibrés et conditionnés sous forme de bobines à l'aide d'une ligne d'extrusion filage composée d'une extrudeuse monovis, d'un bac de refroidissement des filaments sous eau, d'une tireuse rotative, d'un dispositif de contrôle dimensionnel bidirectionnel optique et d'un dispositif d'enroulement/trancanage. La conformation et la calibration du filament sont réalisées selon les standards dimensionnels pour l'impression 3D par dépôt de fil fondu, soit selon un diamètre de filament de 1,75 mm ou 2,85 mm.

Selon une deuxième variante, les granulés obtenus sont transformés en filaments calibrés à l'aide d'une ligne d'extrusion filage composée d'une extrudeuse monovis, d'un bac de refroidissement des filaments sous eau, d'une tireuse rotative, d'un dispositif de contrôle dimensionnel bidirectionnel optique. La conformation et la calibration du filament sont réalisées afin d'obtenir un filament de diamètre compris entre 0,5 et 1,5 mm destiné à être granulé par un granulateur à couteau rotatif permettant l'obtention de micro-granulés cylindriques (micro-pellet en langue anglaise) ayant des diamètres compris entre 0,5 et 1,5 mm et de longueurs comprises entre 0,5 et 1,5 mm destinés à l'impression 3D à l'aide d'une micro extrudeuse à granulés ou micro pellet extruder en langue anglaise.

### Procédé de préparation de l'article

La présente invention vise encore un procédé de préparation d'un article selon la présente invention à partir d'une composition utilisée selon la présente invention comprenant les étapes suivantes, dans cet ordre :
i) placer une composition utilisée selon la présente invention dans la zone d'alimentation d'une imprimante pour fabrication additive par dépôt de matière fondue,
ii) entraîner ladite composition vers la tête d'impression de l'imprimante composée d'un corps de chauffe et d'une buse d'impression, de préférence de section cylindrique, où ladite composition est portée à une température Tc comprise entre la température de fusion de la composition et ladite température de fusion de la composition +20°C ;
iii) extruder la composition fondue au travers de la buse de la tête d'impression pour former une pièce verte tridimensionnelle par dépôt de couches successives ;
iv) éliminer au moins une partie de la partie polymère de la pièce verte par chauffage pour former une pièce brune ;
v) fritter la pièce brune pour former un article comprenant au moins de 99 % poids de matériau(x) inorganique(s) par rapport au poids total de l'article.

### Etape i)

La composition introduite dans zone d'alimentation peut être sous forme de granulés, l'imprimante utilisée est alors munie d'une extrudeuse à granulés ou « pellet extruder » en langue anglaise.

De préférence, la composition introduite dans zone d'alimentation est sous forme de filament, l'imprimante utilisée est alors une imprimante 3D par dépôt de fil fondu.

### Etape ii)

Généralement, la température Tc définie à l'étape ii) va de 170 à 240°C.

### Etape iv)

Cette étape correspond à un déliantage destiné à supprimer, au moins en partie, la partie polymère de la pièce verte en conservant la forme de la pièce, la pièce obtenue est la pièce brune.

Cette étape est généralement effectuée par voie thermique précédée d'un déliantage chimique, au moyen d'un solvant.

La composition utilisée selon la présente invention permet avantageusement de pouvoir s'affranchir de l'étape de déliantage chimique. Le déliantage peut être effectué uniquement par voie thermique.

L'étape de déliantage thermique est réalisée dans un four sous gaz inerte, comme par exemple l'azote ou l'argon. La pièce verte est ainsi soumise à un cycle thermique constitué de différents paliers en temperature correspondant généralement au déliantage thermique de chaque composant/polymère. Lesdits paliers sont généralement au nombre de deux à quatre et leurs températures sont situées entre 80°C et 600°C pour des durées respectives comprises entre 1H et 8H.

A l'issue ce déliantage thermique, la teneur massique en phase polymérique de la pièce, dite pièce brune, va de 1 à 3 % en poids de polymère(s) par rapport au poids total de la pièce.

Selon un mode particulier de l'invention, à l'étape iv) le chauffage est précédé d'une étape d'immersion de la pièce verte dans une solution aqueuse ou hydroalcoolique éventuellement en présence d'ultrasons.

Lorsqu'une étape d'immersion, c'est-à-dire un déliantage chimique, est effectuée, sa durée va généralement de 30 minutes à 12 heures. De préférence, à l'issue ce traitement, la teneur massique en phase polymérique de la pièce va de 3 à 18 % en poids par rapport au poids total de la pièce.

La solution utilisée pour le déliantage chimique est une solution aqueuse ou hydroalcoolique constituée d'eau et d'au moins un alcool en C₁-C₅. De préférence ledit alcool en C₁-C₅ est choisi parmi le méthanol, l'éthanol, les propanols notamment l'isopropanol, les butanols, les pentanols et leurs mélanges en toutes proportions, de préférence l'alcool utilisé est l'isopropanol.

De préférence la solution aqueuse ou hydroalcoolique est constituée d'eau et de 0 à 80% en poids d'un alcool en C₁-C₅ par rapport au poids total de la solution.

Cette étape peut aussi être effectuée en présence d'ultrasons, le traitement aux ultrasons est accompli à l'aide de sonde ultrason de 40 kHz de puissance totale allant de 200 à 800 Watt.

Le déliantage chimique peut également comprendre un traitement acide, en particulier au moyen d'un gaz.

### Etape v)

L'étape v) est une étape de frittage. La mise en œuvre de cette étape relève des compétences de l'homme du métier. Généralement, lorsque le matériau inorganique est une céramique, l'étape de frittage est réalisée à une température allant de 1000 à 2000 °C. Généralement, lorsque le matériau inorganique est un métal, l'étape de frittage est réalisée à une température allant de 800 à 1000 °C.

Les pièces frittées présentent un retrait dimensionnel isotrope compris entre 35 et 55 % volumique par rapport à la pièce verte. Le taux de porosité de cette pièces frittée est compris entre 2 et 10% volumique selon la norme d'essai ISO 18754:2013.

Les exemples qui suivent visent à illustrer l'invention sans en limiter la portée.

### Exemples

Les exemples 1 à 5 correspondent à des compositions conformes à l'invention tandis que les exemples C6 à C10 sont des exemples comparatifs.

### Les quantités en poids des compositions sont données en grammes.

Les composants suivants sont utilisés pour préparer les compositions :
^{(a)}TiO₂ de répartition granulométrique d10=90 nm, d50=145 nm et d90=200 nm commercialisé sous la dénomination TiO₂ Kronos^{®} 1000 par la société Kronos Worldwide, Inc.,
^{(b1)}TPE :Thermolast ^{®} K TF9CGT commercialisé par la société Kraiburg.
^{(b2)}TPE : Thermolast ^{®} K TF7CGT commercialisé par la société Kraiburg ;
^{(d1)}PEG 8000 commercialisé par la société Sigma-Aldrich ;
^{(d2)}PEG 20000 commercialisé par la société Sigma-Aldrich ;
^{(c)}Polyéthylène basse densité : Escorene LLN1001XV commercialisé par la société Exxonmobil Chemical de densité égale à 0,918 g/cm³ selon la norme d'essai ISO 1183-2:2019.

Les compositions sont préparées par dosage des composants en entrée d'extrudeuse bivis co-rotative par deux doseurs gravimétriques Brabender Technologie respectivement référencés DSR28 et DDSR 20. Le premier doseur est dédié au dosage de la partie polymérique de la composition pré-mélangée en amont sous forme de mélange sec ou « dry blend » en langue anglaise. Le second doseur est dédié à la partie inorganique de la composition. Le débit cumulé de ces deux doseurs est fixé à 4 kg/H. L'extrudeuse bivis co-rotative utilisée est un modèle FSCM 21 (Diamètre vis =21mm L/D=40) du fabricant TSA Industriale équipée d'une filière 3 joncs de diamètres 3 mm. La température du procédé (Tp) est fixée à 190°C et la vitesse de rotation est fixée à 400 RPM pour l'ensemble des compositions. Les joncs sont refroidis en sortie de filière à l'air ambiant sur un tapis de convoyage à bande puis granulés à l'aide d'un granulateur à couteaux rotatifs.

### Exemple 1

L'exemple 1 est effectué avec un seul type de TPE, le Thermolast ^{®} K TF9CGT.

**[Tableau1]**

| Com posant | densité | Quantité en poids | Quantité en volume |
|---|---|---|---|
| TiO₂^{(a)} | 4 | 85,06 | 56,66 |
| TPE^{(b1)} | 0,89 | 9,45 | 28,30 |
| PEG 8000^{(d1)} | 0,89 | 2,74 | 8,21 |
| Polyéthylène basse densité^{(c)} | 1,07 | 2,75 | 6,83 |

Les exemples 2 à 5 sont réalisés avec deux types de TPE : le Thermolast ^{®} K TF9CGT et le Thermolast ^{®} K TF7CGT.

### Exemple 2

**[Tableau 2]**

| Composant | densité | Quantité en poids | Quantité en volume |
|---|---|---|---|
| TiO₂^{(a)} | 4 | 84,73 | 55,97 |
| TPE^{(b1)} | 0,89 | 8,98 | 26,63 |
| TPE^{(b2)} | 0,89 | 1,99 | 5,91 |
| PEG 8000^{(d1)} | 1,07 | 2,15 | 5,31 |
| Polyéthylène basse densité^{(c)} | 0,918 | 2,15 | 6,19 |

### Exemple 3

**[Tableau 3]**

| Composant | densité | Quantité en poids | Quantité en volume |
|---|---|---|---|
| TiO₂^{(a)} | 4 | 83,17 | 52,85 |
| TPE^{(b1)} | 0,89 | 10,99 | 31,39 |
| TPE^{(b2)} | 0,89 | 2,19 | 6,24 |
| PEG 8000^{(d1)} | 1,07 | 1,46 | 3,47 |
| Polyéthylène basse densité^{(c)} | 0,918 | 2,19 | 6,05 |

### Exemple 4

**[Tableau 4]**

| Composant | densité | Quantité en poids | Quantité en volume |
|---|---|---|---|
| TiO₂^{(a)} | 4 | 83,17 | 52,91 |
| TPE^{(b1)} | 0,89 | 9,00 | 25,73 |
| TPE^{(b2)} | 0,89 | 2,18 | 6,25 |
| PEG 20000^{(d2)} | 1,07 | 1,45 | 3,48 |
| Polyéthylène basse densité^{(c)} | 0,918 | 4,20 | 11,64 |

### Exemple 5

**[Tableau 5]**

| Composant | densité | Quantité en poids | Quantité en volume |
|---|---|---|---|
| TiO₂^{(a)} | 4 | 83,17 | 52,85 |
| TPE^{(b1)} | 0,89 | 10,99 | 31,39 |
| TPE^{(b2)} | 0,89 | 2,19 | 6,24 |
| PEG 20000^{(d2)} | 1,07 | 1,46 | 3,47 |
| Polyéthylène basse densité^{(c)} | 0,918 | 2,19 | 6,05 |

Les exemples comparatifs C6 et C7 ne comprennent pas de polyéthylène basse densité.

### Exemple C6

**[Tableau 6]**

| Composant | densité | Quantité en poids | Quantité en volume |
|---|---|---|---|
| TiO₂^{(a)} | 4 | 90 | 66,69 |
| TPE^{(b2)} | 0,89 | 10 | 33,31 |

### Exemple C7

**[Tableau 7]**

| Composant | densité | Quantité en poids | Quantité en volume |
|---|---|---|---|
| TiO₂^{(a)} | 4 | 87 | 60,14 |
| TPE^{(b2)} | 0,89 | 12 | 37,28 |
| PEG 8000^{(d1)} | 1,07 | 1 | 2,58 |

### Propriétés mécaniques en flexion

Les modules d'élasticité en flexion, déformation en flexion et contrainte maximale en flexion des compositions conformes des exemples 2 à 5 sont déterminés suivant la norme d'essai ISO 178:2019 relatif aux essais de flexion 3 points à température ambiante de 23°C et RH=50%. Les essais sont effectués au moyen d'éprouvettes d'essais issues d'une mise en œuvre par thermocompression de plaques à la température Tp de180-190°C sous une pression de 10 bar. Cette mise en œuvre standardisée permet de déterminer uniquement les différences de propriétés intrinsèques liées à la formulation en s'affranchissant des biais engendrés par les propriétés mécaniques inter compositions liées au procédé d'impression 3D.

Les valeurs obtenues sont présentées dans le tableau 8.

**[Tableau 8]**

| Formulation | Module d'élasticité en flexion Ef (Mpa) | Déformations en flexion εfM (%) | Contrainte maximale en flexion σfM (Mpa) |
|---|---|---|---|
| Exemple 2 | 407 | 2,31 | 3,90 |
| Exemple 3 | 306 | 2,10 | 3,20 |
| Exemple 4 | 411 | 2,66 | 4,13 |
| Exemple 5 | 352 | 1,90 | 3,75 |

Les compositions des exemples 2 à 5 présentent des propriétés homogènes caractérisées par un comportement ductile avec un faible module d'élasticité en deçà de la limite des 700 MPa représentant la limite basse du caractère rigide d'un plastique tel décrit dans la norme ISO 178:2019 - 3.13. Ces compositions présentent donc une bonne flexibilité permettant notamment un bobinage de ces compositions sous forme de filaments.

### Propriétés rhéologiques

La viscosité des compositions des exemples 2 à 5, conformes à l'invention, et des compositions comparatives C6 et C7 ont été obtenues par rhéologie capillaire à différents taux de cisaillement, ces viscosités sont déterminées suivant la norme d'essai ISO 11443 : 2014 avec une Température d'essai 180°C et une filière de diamètre 1mm avec ratio L/D=10.

### Les valeurs obtenues sont présentées dans le tableau 9.

**[Tableau 9]**

| Formulation | Viscosité Apparente à 20 s-1 (Pa.s) | Viscosité Apparente à 50 s-1 (Pa.s) | Viscosité Apparente à 100 s-1 (Pa.s) |
|---|---|---|---|
| Exemple 2 | 3 396,7 | 1 787,3 | 1 083,2 |
| Exemple 3 | 3 205,4 | 1 703,4 | 1 010,4 |
| Exemple 4 | 4 037,5 | 2 228,9 | 1 342,1 |
| Exemple 5 | 4 024,4 | 2 078,4 | 1 196,4 |
| Exemple C6 | 8 280,3 | 3 406,4 | 1 815,0 |
| Exemple C7 | 8 959,4 | 3 848,4 | 2 078,7 |

Les compositions conformes des exemples 2 à 5 présentent des viscosités homogènes et suffisamment modérées, à des taux de cisaillement de l'ordre de ceux mis en œuvre au sein des têtes d'impression 3D de type filament ou micro-extrudeuse équipant les dispositifs de fabrication additive classiques. Ces compositions sont donc utilisables dans des procédés de fabrication additive par dépôt de matière fondue.

Les compositions comparatives de exemples C6 et C7, présentent des viscosités supérieures rendant impossible ou inconstante leur utilisation dans les conditions de faibles cisaillements des procédés de fabrication additive.

### Préparation d'articles

Des articles ont été préparés à partir des compositions conformes des exemples 3 et 5. Un article a ainsi été produit à partir d'un filament (Diamètre 2,85mm) de la composition de l'exemple 3 et un autre a été produit à partir de micro-granules (Diamètre 1,5 mm et longueur 2 mm) issues de la composition de l'exemple 5.

15 m de filament de la composition de l'exemple 3 a été introduit en tête de la zone d'alimentation d'une imprimante Prusa I3 Reworks du fabricant eMotionTech. Le filament est entrainé par un extrudeur de type « direct drive » de marque Bondtech, puis la composition est entraînée vers la tête d'impression de l'imprimante où elle est portée à une température Tc de 210°C. La composition fondue est extrudée au travers de la buse de la tête d'impression de diamètre 0,8 mm avec une vitesse de déplacement de 10 mm/s de manière à former une pièce verte tridimensionnelle de forme cubique de 15mm de côté par dépôt de couches successives. Le plateau de dépose matière est porté à une température de 70°C au cours de l'impression.

40 g de micro -granules de la composition de l'exemple 5 sont introduites dans la zone d'alimentation d'une imprimante Prusa I3 Reworks du fabricant eMotionTech. Les micro granules sont entrainée par un extrudeur de type « pellet extruder » de marque Mahor XYZ, puis la composition est entraînée vers la tête d'impression de l'imprimante où elle est portée à une température Tc de 210°C. La composition fondue est extrudée au travers de la buse de la tête d'impression de diamètre 0,8mm avec une vitesse de déplacement de 10 mm/s de manière à former une pièce verte tridimensionnelle de forme cubique de 15mm de côté par dépôt de couches successives. Le plateau de dépose matière est porté à une température de 70°C au cours de l'impression.

Les pièces vertes sont ensuite déliantées par chauffage suivant un premier palier de 1H à 250°C suivi d'un second palier de 1H à 500°C pour obtenir des pièces brunes tridimensionnelles dont la teneur massique en phase polymérique est de 3 % par rapport au poids total des pièces brunes. Enfin les pièces brunes sont frittées par chauffage à 1500°C pendant 2H. Les articles obtenus comprennent 99 % poids de matériau(x) inorganique(s), les articles présentent des retraits isotropes de l'ordre de 47 % volumique.

### Exemples comparatifs supplémentaires

### Exemple C8

**[Tableau 10]**

| Com posant | densité | Quantité en poids | Quantité en volume |
|---|---|---|---|
| TiO₂^{(a)} | 4 | 92 | 71,90 |
| TPE^{(b1)} | 0,89 | 8 | 28,10 |

La composition de l'exemple comparatif C8 comprend un TPE en une quantité inférieure à celle des compositions selon l'invention. La composition C8 ne peut pas être mise en forme de façon convenable. Lorsqu'elle est formulée en granulés, ceux-ci sont friables et leur répartition n'est pas homogène. En conséquence, ces granulés ne peuvent pas être utilisés dans un procédé de fabrication additive car ils ne permettent pas l'obtention d'un débit régulier. Lorsqu'elle est formulée en filament, le filament est trop rigide pour être bobinable. La composition C8 ne peut pas être utilisée dans un procédé d'impression 3D par dépôt de matière fondue.

### Exemple C9

**[Tableau 11]**

| Com posant | densité | Quantité en poids | Quantité en volume |
|---|---|---|---|
| TiO₂^{(a)} | 4 | 78 | 44,10 |
| TPE^{(b2)} | 0,89 | 22 | 55,90 |

La composition de l'exemple comparatif C9 comprend des TPE, en une quantité supérieure à celle des compositions selon l'invention. La composition C9 est trop souple pour pouvoir être utilisée dans un procédé d'impression 3D par dépôt de matière fondue.

### Exemple C10

**[Tableau 12]**

| Com posant | densité | Quantité en poids | Quantité en volume |
|---|---|---|---|
| TiO₂^{(a)} | 4 | 81,2 | 49,46 |
| TPE^{(b1)} | 0,89 | 9,0 | 24,64 |
| TPE^{(b2)} | 0,89 | 2,2 | 6,02 |
| PEG 8000^{(d1)} | 1,07 | 1,5 | 3,42 |
| Polyéthylène basse densité^{(c)} | 0,918 | 6,1 | 16,46 |

La composition de l'exemple comparatif C10 comprend du polyéthylène basse densité, en une quantité supérieure à celle des compositions selon l'invention.

La composition C10 tend à cristalliser lors de la mise en œuvre du procédé de fabrication additive. La pièce verte obtenue présente une mauvaise cohésion intercouche conduisant à un délaminage de l'article.

## Revendications

1. Utilisation d'une composition comprenant :
a) de 75 à 90,75% en poids d'au moins un matériau inorganique par rapport au poids total de la composition,
et une phase polymère comprenant :
b) de 9 à 20 % en poids d'au moins un élastomère thermoplastique par rapport au poids total de la composition,
c) de 0,25 à 5% en poids d'au moins un polyéthylène à basse densité par rapport au poids total de la composition ;
d) de 0 à 5% en poids d'au moins un polyéthylène glycol de masse molaire allant de 5000 à 20000 g/mol, par rapport au poids total de la composition,
e) de 0 à 3 % en poids de poly(téréphtalate d'éthylène), de préférence glycolé, par rapport au poids total de la composition,
dans un procédé de fabrication additive par dépôt de matière fondue.

2. Utilisation selon la revendication 1 dans laquelle le matériau inorganique est sous forme de particules dont la taille de la dimension la plus grande va de 0,50 à 500 µm.

3. Utilisation selon la revendication 1 ou 2 dans laquelle le matériau inorganique est sous forme d'une poudre.

4. Utilisation selon l'une quelconque des revendications précédentes dans laquelle le matériau inorganique est choisi dans le groupe formé par le dioxyde de titane, le dioxyde de zirconium, l'oxyde d'aluminium III et le carbure de silicium, de préférence le matériau inorganique est le dioxyde de titane.

5. Utilisation selon l'une quelconque des revendications précédentes dans laquelle l'élastomère thermoplastique est choisi dans le groupe formé par les TPE de polyuréthanes, les TPE styréniques, les TPE copolyesters, les TPE copolyamides et les TPE oléfiniques, de préférence l'élastomère thermoplastique est un TPE styrénique, de manière préférée choisi parmi le polystyrène-b-polybutadiène-b- polystyrène et le polystyrène-b-poly(éthylène-butène) -b- polystyrène.

6. Utilisation selon l'une quelconque des revendications précédentes dans laquelle la composition se présente sous une forme choisie dans le groupe constitué par les granulés et les filaments.

7. Utilisation selon l'une quelconque des revendications précédentes dans laquelle la composition comprend de 82 à 90%, et de manière préférée de 83 à 86 % d'au moins un matériau inorganique par rapport au poids total de la composition.

8. Utilisation selon l'une quelconque des revendications précédentes dans laquelle la composition comprend de 9 à 17 % et de manière préférée de 9 à 14 % en poids d'au moins un élastomère thermoplastique par rapport au poids total de la composition.

9. Utilisation selon l'une quelconque des revendications précédentes dans laquelle la composition comprend de 1 à 4,7 % et de manière préférée de 2 à 4,5 % en poids d'au moins un polyéthylène à basse densité par rapport au poids total de la composition.

10. Utilisation selon l'une quelconque des revendications précédentes dans laquelle la composition comprend de 0,5 à 4 % et de manière préférée de 1 à 3 % en poids d'au moins un polyéthylène glycol de masse molaire allant de 5000 à 20000 g/mol, par rapport au poids total de la composition.

11. Procédé de fabrication d'un article par impression 3D comprenant les étapes suivantes, dans cet ordre :
i) placer une composition utilisée selon l'une quelconque des revendications 1 à 6 dans la zone d'alimentation d'une imprimante pour fabrication additive par dépôt de matière fondue,
ii) entraîner ladite composition vers la tête d'impression de l'imprimante composée d'un corps de chauffe et d'une buse d'impression où ladite composition est portée à une température Tc comprise entre la température de fusion de la composition et ladite température de fusion de la composition + 20°C,
iii) extruder la composition fondue au travers de la buse de la tête d'impression pour former une pièce verte tridimensionnelle par dépôt de couches successives,
iv) éliminer au moins une partie de la partie polymère de la pièce verte par chauffage pour former une pièce brune tridimensionnelle,
v) fritter la pièce brune pour former un article comprenant au moins de 99 %
poids de matériau(x) inorganique(s) par rapport au poids total de l'article.

12. Procédé selon la revendication précédente dans lequel la température Tc définie à l'étape ii) va de 170 à 240 °C.

13. Procédé selon la revendication précédente dans lequel, à l'étape iv, le chauffage est précédé d'une étape d'immersion de la pièce verte dans une solution aqueuse ou hydroalcoolique éventuellement en présence d'ultrasons.

14. Utilisation d'une composition selon l'une quelconque des revendications 1 à 10 ou obtenue selon le procédé suivant l'une quelconque des revendications 11 à 13 pour la fabrication d'un article comprenant au moins 99 % en poids de matériau(x) inorganique(s) par rapport au poids total de l'article.

15. Utilisation selon la revendication précédente pour la fabrication d'un article utilisé en aéronautique en particulier dans la partie interne des moteurs et dans la partie échappement des moteurs ; en bijouterie ; dans des dispositifs tels que les dispositifs de filtration, les réacteurs, les microréacteurs, les catalyseurs et pour le rechargement local des pièces d'usure.
